(19) Europäisches Patentamt
European Patent Office
Office européen des brevets

(11) Veröffentlichungsnummer : **0 370 266 B1**

(12) # EUROPÄISCHE PATENTSCHRIFT

(45) Veröffentlichungstag der Patentschrift : **27.12.91 Patentblatt 91/52**

(51) Int. Cl.[5] : **C02F 1/62**, C22B 3/00

(21) Anmeldenummer : **89119972.1**

(22) Anmeldetag : **27.10.89**

(54) **Verwendung von substituierten Thioharnstoffen zur Abtrennung komplex gebundener Schwermetallionen.**

(30) Priorität : **19.11.88 DE 3839222**

(43) Veröffentlichungstag der Anmeldung : **30.05.90 Patentblatt 90/22**

(45) Bekanntmachung des Hinweises auf die Patenterteilung : **27.12.91 Patentblatt 91/52**

(84) Benannte Vertragsstaaten : **AT BE CH DE ES FR GB GR IT LI LU NL SE**

(56) Entgegenhaltungen :
**DE-C- 3 340 056**
**CHEMICAL ABSTRACTS, Band 103, Nr. 22, 2. Dezember 1985, Seite 432, Zusammenfassung Nr. 184623e, Columbus, Ohio, US; K.H. KOENIG et al.: "N,N-Dialkyl-N'-benzoylthioureas as reagents for selective extractions for the separation and enrichment of platinum - group metals", & FRESENIUS' Z. ANAL. CHEM. 1985, 321(5), 457-60 (Ger)**

(56) Entgegenhaltungen :
**CHEMICAL ABSTRACTS, Band 109, Nr. 2, 11. Juli 1988, Seite 206, Zusammenfassung Nr. 9762b, Columbus, Ohio, US; D. HOLLMAN et al.: "Separation and purification of platinum -group metals and gold by precipitation", & DE-A-3 711 801 (03-03-1989)**

(73) Patentinhaber : **Degussa Aktiengesellschaft**
**Weissfrauenstrasse 9**
**W-6000 Frankfurt am Main 1 (DE)**

(72) Erfinder : **Schuster, Michael, Dr. Dipl.-Chem.**
**Haintalstrasse 20**
**W-6000 Frankfurt 56 (DE)**
Erfinder : **König, Karl-Heinz, Prof. Dr. Dipl.-Chem.**
**Kirchhainer Strasse 13**
**W-6000 Frankfurt 50 (DE)**
Erfinder : **Lotter, Hermann, Dr. Dipl.-Chem.**
**Beethovenstrasse 1**
**W-6452 Hainburg 2 (DE)**
Erfinder : **Drauz, Karlheinz, Dr. Dipl.-Chem.**
**Flurstrasse 5**
**W-6463 Freigericht 1 (DE)**

EP 0 370 266 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von substituierten Thioharnstoffen zur Abtrennung von komplex gebundenen Schwermetallionen aus Reaktionslösungen und Abwässern, die anorganische und/oder organische Komplexbildner enthalten, wie Ammoniak, Amine, Diamine, Aminosäuren oder Hydroxysäuren.

Aufgrund Ihrer Toxizität müssen Schwermetalle bis auf Restkonzentrationen von wenigen Milligramm pro Liter aus Abwässern und Reaktionslösungen abgetrennt werden. Dies geschieht üblicherweise durch Neutralisation mit Natronlauge, Soda oder Kalkmilch. Dabei bilden sich schwerlosliche Metallhydroxide bzw. -carbonate, die durch Sedimentation oder Filtration entfernt werden können. Sind in den Lösungen Komplexbildner vorhanden, so versagt diese Arbeitsweise. Zur Anwendung kommen hier andere Techniken, wie Überalkalisierung, Elektrolyse, Metallsulfidfällung mit Schwefelwasserstoff oder der Einsatz von Trimercapto-S-triazintrinatriumsalz-lösung (TMT 15).

Diese Verfahren haben den Nachteil, daß sie zum Teil sehr aufwendig und teuer sind, keine hohen Abreicherungsraten erzielen oder in bestimmten Anwendungsbereichen keine gut filtrierbaren Niederschläge liefern.

Aus der DE-PS 3340056 ist ein Verfahren zur Abtrennung und Reinigung von Platinmetallen von den übrigen Edel- und Nichtedelmetallen aus sauren Lösungen bekannt, bei dem substituierte Thioharnstoffe der allgemeinen Formel $R_1R_2N\text{-}CS\text{-}NH\text{-}COR_3$ eingesetzt werden. Diese Lösungen enthalten allerdings keine Komplexbildner.

Es war Aufgabe der vorliegenden Erfindung, ein Mittel zur Abtrennung von komplex gebundenen Schwermetallionen aus Reaktionslösungen und Abwässern zu finden, die anorganische und/oder organische Komplexbildner, insbesondere Aminosäuren oder Hydroxysäuren enthalten, wobei auf möglichst einfache Weise hohe Abreicherungsraten und gut filtrierbare, kristalline Niederschläge erhalten werden sollten.

Diese Aufgabe wird erfindungsgemäß gelöst durch die Verwendung von substituierten Thioharnstoffen der allgemeinen Formel

$$R_1R_2N\text{-}CS\text{-}NH\text{-}COR_3$$

wobei $R_1$, $R_2$, $R_3$ = substituierte oder unsubstituierte Alkyl-, Aryl- und/oder Aralkylgruppen und $R_1$ und $R_2$ auch Wasserstoff bedeuten, bei pH-Werten zwischen 1 und 10 und Temperaturen zwischen 15 und 100°C.

Vorteilhafterweise verwendet man N,N-Dialkyl-N'-benzoylthioharnstoffe, wobei als Alkylgruppen Methyl-, Ethyl-, n- Propyl- oder Isobutylgruppen eingesetzt werden. Außerdem ist es vorteilhaft pH-Werte zwischen 5 und 9 und Temperaturen zwischen 20 und 80°C anzuwenden.

Diese Thioharnstoffe lassen sich leicht aus den entsprechenden sekundären Aminen, Benzoylchlorid und Kaliumthiocyanat herstellen. Eine Reinigung der Rohprodukte — beispielsweise durch Umkristallisation — ist nicht notwendig.

Komplex gebundene Schwermetalle können mit den Thioharnstoffverbindungen umkomplexiert und anschließend aus der wäßrigen, neutralen bzw. schwach sauren oder schwach basischen Lösung ausgefällt werden, indem man die feste Thioharnstoffverbindung oder eine Lösung derselben in z.B. Natronlauge, Kalilauge oder Kalkmilch zugibt.

In Wasser bzw. verdünnten Säuren sind diese Thioharnstoffe schwerlöslich.

Das Fällungsmittel wird im Überschuß zugesetzt. Der entstehende Metallkomplex ist in wäßriger Lösung schwerlöslich und bildet einen kristallinen, gut filtrierbaren Niederschlag.

Folgende Tabelle zeigt für einige Schwermetalle die für eine Fällung der Metallchelate optimalen pH-Bereiche.

| Metall | pH-Bereich der Fällung |
|---|---|
| $Tl^{1+}$ | 8 - 9 |
| $Pb^{2+}$, $Ni^{2+}$, $Zn^{2+}$ | 5 - 7 |
| $Co^{2+}$, $Cd^{2+}$ | 7 - 8 |
| $Cu^{2+}$, $Hg^{2+}$ | 2 - 6 |

Der abgetrennte Niederschlag — ein Gemisch aus Schwermetall-Thioharnstoffkomplex und überschüssigem Thioharnstoff — kann komplett entsorgt oder durch Verglühen aufgearbeitet werden. Kupferkomplexe lassen sich auch durch Digerieren des Niederschlags in 3 molarer Schwefelsäure zersetzen. Der ungelöste Thioharnstoff kann abfiltriert und recycliert werden.

Aus Komplexgemischen, die beispielsweise Kobalt, Nickel oder Kupfer enthalten, kann der freie Thioharnstoff durch Digerieren des Niederschlages in Lauge gelöst und nach Ansäuren des Filtrats auf pH 6 ausgefällt werden.

Die geringe Wasserlöslichkeit der Thioharnstoffverbindungen und deren Schwermetall-Thioharnstoffkomplexe ermöglicht die einfache Isolierung der im Filtrat enthaltenen anorganischen und/oder organischen Salze und Verbindungen.

Folgende Beispiele sollen das erfindungsgemäße Verfahren näher erläutern :

Beispiel 1 :

1 ℓ einer wäßrigen Reaktionslösung mit 58 g Acetylmethionin, 1,6 g Methionin, 5,3 g Dipeptid, 120 g Essigsäure und 115 mg Kobalt (II) wird mit konz. Natronlauge auf pH 7 gestellt. Die Lösung wird auf 70°C erwärmt und unter kräftigem Rühren mit 15 mℓ einer Lösung von 3 g N,N-Diethyl-N'-benzoylthioharnstoff (DEBT) in 1N Natronlauge oder 3 g festem DEBT versetzt. Der End-pH soll zwischen 7 und 8 liegen. Nach 30 min Rühren bei 70°C wird ein pH-Wert von 6-6,5 eingestellt und das Reaktionsgemisch auf 20°C abgekühlt. Der Niederschlag aus $Co(DEBT)_2$ und überschüssigem DEBT wird abfiltriert. Die Fällung ist grobkörnig und gut filtrierbar.

Kobalt-Restkonzentration des Filtrats : 3-5 mg/ℓ
(AAS-Messung nach $H_2O_2/H_2SO_4$-Aufschluß).

Durch Digerieren des Niederschlags in 1N Natronlauge können 35% der eingesetzten DEBT-Menge recycliert werden.

Einengen und Ansäuren des Filtrats auf pH 1,8 ergibt nach Filtration Acetylmethionin mit einem Gehalt von $<$ 10 mg/kg DEBT.

Beispiel 2 :

1 ℓ der unter Beispiel 1 beschriebenen Aminosäurelösung wird unter Rühren mit konz. Natronlauge auf pH 7 gestellt. Nach Zugabe von 5 g N,N-Dimethyl-N'-benzoylthioharnstoff erhitzt man die Suspension unter kräftigem Rühren 3 h auf 75°C, kühlt auf 20°C ab und filtriert. Die Fällung ist grobkörnig und gut filtrierbar.

Kobalt-Restkonzentration des Filtrats : 2,5 mg/ℓ
(AAS-Messung nach $H_2O_2/H_2SO_4$-Aufschluß).

Beispiel 3 :

1 ℓ einer wäßrigen Reaktionslösung mit 173 g Acetylvalin, 25,5 g Valin und 88 mg Kobalt (II) wird unter Rühren mit konz. Natronlauge auf pH 7 gestellt.

Nach Zugabe von 10 g N,N-Dibutyl-N'-benzoylthioharnstoff erhitzt man die Suspension unter kräftigem Rühren 3 h auf 75°C, kühlt auf 20°C ab und filtriert. Die Fällung ist grobkörnig und gut filtrierbar.

Kobalt-Restkonzentration des Filtrats : 10 mg/ℓ
(AAS-Messung nach $H_2O_2/H_2SO_4$-Aufschluß).

Beispiel 4 :

1 ℓ einer schwachsauren, wäßrigen Reaktionslösung mit 5 g Methionin, 15 g Natriumchlorid und 100 mg/ℓ Kupfer (II) wird auf 60°C erwärmt und unter kräftigem Rühren mit 6 mℓ einer Lösung von 1,1 g N,N-Diethyl-N'-benzoylthioharnstoff (DEBT) in 1N Natronlauge oder 1,1 g festem DEBT versetzt.

Der End-pH soll zwischen 5 und 6,5 liegen.

Nach 30 min Rühren bei 60°C unter pH-Kontrolle läßt man das Reaktionsgemisch auf 20°C abkühlen.

Der Niederschlag aus Cu $(DEBT)_2$ und überschüssigem DEBT wird abgetrennt. Die Fällung ist grobkörnig und gut filtrierbar.

Kupfer-Restkonzentration des Filtrats : < 1 mg/ℓ.
(AAS-Messung nach $H_2O_2/H_2SO_4$-Aufschluß).

Beispiel 5 :

1 ℓ einer wäßrigen Reaktionslösung mit 10 g Weinsäure und 1 g Nickel (II) wird unter Rühren mit konz. Natronlauge auf pH 7-8 gestellt.

Die Lösung wird auf 70°C erwärmt und unter kräftigem Rühren mit 10 g festem DEBT oder 50 ml einer Lösung von 10 g DEBT in 1 N Natronlauge versetzt. Nach 30 min Rühren bei 70°C unter pH-Kontrolle (pH ≥ 6) läßt man das Reaktionsgemisch auf 20° abkühlen. Der grobkörnige und gut filtrierbare Niederschlag aus Ni $(DEBT)_2$ und überschüssigem DEBT wird abgetrennt.

Nickel-Restkonzentration des Filtrats : ≤ 0,3 mg/ℓ
(AAS-Messung nach $H_2O_2/H_2SO_4$-Aufschluß).

Beispiel 6 :

1 ℓ einer wäßrigen Reaktionslösung mit 10 g Weinsäure, 50 g Natriumbromid und 1 g Nickel (II) wird unter Rühren mit konz. Natronlauge auf pH 7-8 gestellt. Die weitere Umsetzung erfolgt wie bei Beispiel 5 beschrieben, außer 60 min bei 80°C unter pH-Kontrolle (pH ≥ 6) gerührt wird.

Nickel-Restkonzentration des Filtrats : 2-3 mg/ℓ
(AAS-Messung nach $H_2O_2/H_2SO_4$-Aufschluß).

Beispiel 7 :

1 ℓ einer wäßrigen Reaktionslösung mit 20 g Weinsäure, 0,3 g Nickel (II), 0,3 g Kupfer (II) und 0,3 g Zink (II) wird unter Rühren mit konz. Natronlauge auf pH 8 gestellt.

Die Lösung wird auf 70°C erwärmt und unter kräftigem Rühren mit 25 g festem DEBT versetzt. Nach 5 h Rühren bei 70°C läßt man das Reaktionsgemisch auf 20°C abkühlen. Der grobkörnige und gut filtrierbare Niederschlag wird abgetrennt.

Schwermetall-Restkonzentration des Filtrats :
0,5 mg/ℓ Ni
0,1 mg/ℓ Cu
0,05 mg/ℓ Zn
(AAS-Messung nach $H_2O_2/H_2SO_4$-Aufschluß).

Beispiel 8 :

1 ℓ einer wäßrigen Reaktionslösung mit 20 g Ascorbinsäure, 0,5 g Kobalt (II) und 0,5 g Nickel (II) wird unter Rühren mit konz. Natronlauge auf pH 7 gestellt.

Die weitere Umsetzung erfolgt wie bei Beispiel 7 beschrieben.

Schwermetall-Restkonzentration des Filtrats :
0,1 mg/ℓ Co
0,4 mg/ℓ Ni
(AAS-Messung nach $H_2O_2/H_2SO_4$-Aufschluß).

Beispiel 9 :

1 ℓ einer wäßrigen Reaktionslösung mit 20 g Oxalsäure, 0,5 g Kobalt (II) und 0,5 g Nickel (II) wird unter Rühren mit konz. Natronlauge auf pH 7 gestellt.

Die weitere Umsetzung erfolgt wie bei Beispiel 7 beschrieben.
Schwermetall-Restkonzentration des Filtrats :
50 mg/ℓ Co
9 mg/ℓ Ni
(AAS-Messung nach $H_2O_2/H_2SO_4$-Aufschluß).

Beispiel 10 :

1 ℓ einer wäßrigen Reaktionslösung mit 20 g Ammoniumchlorid, 0,3 g Zn (II), 0,3 g Cadmium (II) und 0,3 g Blei (II) wird unter Rühren mit konz. Natronlauge auf pH 7-8 gestellt.
Die weitere Umsetzung erfolgt wie bei Beispiel 7 beschrieben.
Schwermetall-Restkonzentration des Filtrats :
0,03 mg/ℓ Zn
0.1 mg/ℓ Cd
0.6 mg/ℓ Pb
(AAS-Messung).

Beispiel 11 :

1 ℓ der in Beispiel 10 beschriebenen Reaktionslösung wird entsprechend mit 25 g festem N,N-Dimethyl-N'-benzoylthioharnstoff umgesetzt.
Schwermetall-Restkonzentration des Filtrats :
0,05 mg/ℓ Zn
0,4 mg/ℓ Cd
0.5 mg/ℓ Pb
(AAS-Messung)

## Patentansprüche

1. Verwendung von substituierten Thioharnstoffen der allgemeinen Formel $R_1R_2N\text{-}CS\text{-}NH\text{-}COR_3$, wobei $R_1$, $R_2$ und $R_3$ = substituierte oder unsubstituierte Alkyl-, Aryl- und/oder Aralkylgruppen und $R_1$ und $R_2$ auch Wasserstoff bedeuten, zur Abtrennung von komplex gebundenen Schwermetallionen aus Reaktionslösungen und Abwässern, die anorganische und/oder organische Komplexbildner enthalten, bei pH-Werten zwischen 1 und 10 und Temperaturen zwischen 15 und 100°C.
2. Verwendung von N,N-Dialkyl-N'-benzoylthioharnstoffen, deren Alkylgruppen Methyl-, Ethyl-, n-Propyl- und/oder Isopropylgruppen sein können, gemäß Anspruch 1.
3. Verwendung von substituierten Thioharnstoffen gemäß Anspruch 1 und 2 bei pH-Werten zwischen 5 und 9 und Temperaturen zwischen 20 und 80°C.

## Claims

1. The use of substituted thioureas corresponding to the general formula $R_1R_2N\text{-}CS\text{-}NH\text{-}COR_3$, in which $R_1$, $R_2$ and $R_3$ = substituted or unsubstituted alkyl, aryl and/or aralkyl groups and $R_1$ and $R_2$ also represent hydrogen, for the removal of complexed heavy metal ions from reaction solutions and wastewaters containing inorganic and/or organic complexing agents at pH values of 1 to 10 and at temperatures of 15 to 100°C.
2. The use of N,N-dialkyl-N'-benzoyl thioureas, of which the alkyl groups may be methyl ethyl, n-propyl and/or isopropyl groups, as claimed in claim 1.
3. The use of substituted thioureas as claimed in claims 1 and 2 at pH values of 5 to 9 and at temperatures of 20 to 80°C.

## Revendications

1. Utilisation de thiourées substituées de formule générale :

$$\begin{matrix} R_1 & & & & & \\ & > N & - & C & - & NHCOR_3 \\ R_2 & & & \| & & \\ & & & S & & \end{matrix}$$

dans laquelle $R_1$, $R_2$, $R_3$ signifient des radicaux alcoyle, aryle et/ou aralcoyle substitués ou non substitués et $R_1$ et $R_2$ représentent aussi de l'hydrogène, en vue de l'élimination des métaux lourds liés sous forme de complexes à partir de solutions réactionnelles et d'eaux usées, renfermant des agents chelatants minéraux et/ou organiques, à des valeurs de pH entre 1 et 10 et à des températures entre 15 et 100°C.

2. Utilisation des N,N-dialcoyl-N'-benzoylthiourées dont les radicaux alcoylés peuvent être le méthyle, l'éthyle, le n-propyle et/ou l'isopropyle, selon la revendication 1.

3. Utilisation de thiourées substituées selon les revendications 1 et 2, à des valeurs de pH comprises entre 5 et 9 et à des températures entre 20 et 60°C.